# EUROPEAN PATENT SPECIFICATION

(11) **EP 4 180 275 B1**
(45) Date of publication and mention of the grant of the patent: **22.07.2026**
(21) Application number: 21207511.3
(22) Date of filing: 10.11.2021
(51) Int. Cl.: B60R 11/04, B60S 1/08

(54) **VEHICLE FRONT CAMERA ARRANGEMENT**
FRONTKAMERAANORDNUNG EINES FAHRZEUGS
AGENCEMENT DE CAMÉRA AVANT DE VÉHICULE

(43) Date of publication of application: 17.05.2023
(73) Proprietor: FICOSA International GmbH, 38302 Wolfenbüttel (DE)
(72) Inventor: RITSCHE, Marc, 38302 Wolfenbüttel (DE)
(74) Representative: Bardehle Pagenberg Partnerschaft mbB Patentanwälte Rechtsanwälte

(56) References cited:
- EP-A1- 3 851 327
- WO-A1-2012/138455
- DE-A1- 102015 210 449
- US-A1- 2015 307 026
- US-A1- 2021 179 019
- US-B2- 10 676 030

## Description

### 1. Technical field

The invention relates to electronic vehicle cameras for commercial vehicles. Particularly, the invention relates to a vehicle front camera arrangement for a commercial vehicle that is protected by a windshield from pollution that affects the image quality of the vehicle camera.

### 2. Prior art

Commercial vehicles for a view in front of the vehicle usually comprise an arm which holds a reflective mirror for Class VI. Nowadays there is the tendency to replace this reflective mirror by a camera module mainly for aerodynamics improvement and better night vision.

However, such class VI camera modules in front of the vehicle are exposed to a lot of pollution, like dust, rain, salt, insects, etc. that cause an optical contamination. Attempts have been made to avoid or reduce such pollution of the camera module by providing a protective cover in the form of a dome-shaped transparent plastic cover covering the camera module. A problem of this solution is that the pollution is still given and dirt undesirably attaches to the external surface of said dome-shaped pollution cover due to the airflow in front of the vehicle. Thus, the pollution is still present and provides an optical contamination to the view of the camera module. If said transparent cover is polluted, it may not be possible for the camera module to see the legally required field of view (FOV). Particularly, dome shaped transparent covers have the tendency to pollute too much.

The document DE 10 2015 210 449 A1 discloses an arrangement of a camera in the rear of a vehicle, wherein the camera is integrated with antennas within the so called "shark fin" on the roof of the car and looks backwards. The arrangement comprises a cone-shaped sight chute that is arranged substantially in vertical direction. The sight cute prevents the camera from outer environmental influences. However, due to the integration into the shark fin of the vehicle and the camera viewing backwards the camera cannot be used as a vehicle front camera. Further, the sight chute comprises a vertically oriented opening that only prevents the lens from rain, when the vehicle does not move, but does not prevent the lens from an air flow during driving. However, since the camera of this document points backwards, no significant air flow will occur at the camera during driving.

The document EP 2 924 398 A2 discloses a sensor assembly, wherein the sensor can be a camera that is arranged within a holding arm.

The document US 2021/0179019 A1 relates to a method, system, medium, and implementations for detecting sensor tampering. It discloses an environment-proof camera housing having a slanted surface. The slanted surface is made of a transparent material to allow the camera to see through.

The document EP 3 851327 A1 discloses a vehicle front camera comprising a protective cover for reducing pollution or environmental influences that could compromise the field of view of the camera optics. The protective cover is optically transparent and comprises a cover opening, wherein the field of view of the camera optics at least partially goes through the cover opening. Further, the camera points downward to the floor in front of the vehicle.

The object of the present invention is to provide a solution to overcome the drawbacks related to pollution of a class VI vehicle camera.

### 3. Summary of the invention

The above-mentioned problem is solved by a vehicle front camera arrangement according to claim 1.

Particularly, the above mentioned problem is solved by a vehicle including a camera arrangement comprising: a camera module comprising a camera lens, the camera lens having a field of view (FOV), a protective cover for protecting the camera lens, wherein the protective cover comprises a cover opening that is arranged such that the field of view of the camera lens at least partially goes through the cover opening. The camera arrangement is a vehicle font camera arrangement. The vehicle font camera arrangement is preferably a so called "class VI" camera module, comprising the corresponding FOV. The vehicle font camera arrangement replaces a corresponding class VI mirror. The protective cover preferably is an outermost cover that prevents the camera lens from direct air flow in front of the vehicle that usually contains dirt, dust, water droplets, snow, salt, insects or other particles or liquids that may attach to a camera lens and affect or even eliminate the view of the camera lens. Since the protective cover comprises a cover opening, the FOV of the camera lens at least partially goes through the cover opening. Thus, the protective cover cannot hinder the legally required FOV of the camera module and its camera lens. Simultaneously, the protective cover in a kind of "windscreen" protects the camera lens from pollution. Although it is referred to a cover "opening", and preferably the cover opening is a true opening that is surrounded in total by material of the protective cover, the cover opening must not be surrounded in total by material of the protective cover. Preferably, due to the cover opening the camera lens has direct contact to the ambient, but is arranged in the "slip stream" behind the protective cover. Thus, the view of the camera module through the cover opening is not affected at all. Preferably, at least the legally required FOV of a class VI camera lies within the cover opening. Preferably, the portion of the FOV of the camera module that goes through the cover opening is 10-50% larger than the legally required FOV of a class VI camera. The camera module points downwards to the floor in front of the vehicle and the protective cover is optically transparent.

Preferably, the camera lens having a field of view (FOV) encompassing an exterior zone in front and to the side of a motor vehicle. Preferably, the camera lens having a field of view (FOV) encompassing the legally required field of view of a class VI vehicle camera.

Preferably, the camera lens is arranged vertically above the cover opening. Thus, the camera is protected from any dirt reaching the vehicle front camera arrangement during driving at any expectable speed of the vehicle, particularly a truck or a commercial van. The speed may vary from 0 to about 100km/h or even more for commercial vans. Therefore, the airflow or wind reaches the vehicle front camera arrangement under different angles. In addition, wind turbulences are expected.

However, surprisingly when the camera lens is arranged vertically above the cover opening the camera lens of a VI front camera that generally looks downwards is well protected against pollution. Thus, the cover opening within the protective cover acts as a kind of windshield for the camera lens, which is arranged within the slip stream behind the protective cover. Thus, the camera lens has a free look on the required FOV, but the protective cover still protects the camera lens from wind and dirt.

Preferably, the cover opening in a projection seen against the driving direction comprises a highest portion that extends vertically to a lower vertical position in respect to the ground than the vertical position of a lowest portion of the camera lens.

Preferably, the cover opening comprises a highest portion that extends vertically to a lower vertical position in respect to the ground than the lowest portion of the overall camera module. Thus, not only the lens of the camera module but the overall camera module is protected by the protective cover, even when a perfect FOV is obtained by the cover opening. This prevents any water or dirt entering into the connection of the camera module to a housing.

Preferably, the cover opening comprises an edge that is arranged substantially parallel to the ground. The camera module points downwards. This ensures that the camera lens has a free FOV substantially downwards perpendicular to the ground.

Preferably, the protective cover is an outermost cover. Thus, the protective cover is directly subjected to the ambient and the airflow or wind during driving.

Preferably, the cover opening defines two spaces: (1) an inner space arranged between the camera module and the cover opening and surrounded by a wall of the protective cover, and (2) an outer space being a part of the environment at least in front of the motor vehicle. It should be noted that foreign matter, like dust or water, may get into the inner space of the protective cover through the cover opening, but such foreign matter is also allowed to get out of the inner space of the protective cover through the cover opening. This is, foreign matter may be allowed to move from the outer space to the inner space and vice-versa, from the inner space to the outer space, through the cover opening.

Preferably, the protective cover is not a structural element of the vehicle front camera arrangement. Thus, it does not hold or support the camera module. Preferably, the protective cover exclusively protects the camera lens. Preferably, the protective cover is a separate element from the structural elements of the vehicle front camera arrangement. Thus, it can be made from a different, transparent material, such that the camera module is able to - at least partially - look through the protective cover.

Preferably, no other components or elements are arranged within the inner space of the protective cover, preferably not in the area of the cover opening. Therefore, the inner space contains only ambient air. Thus, no foreign matter, like dust or water, can be attached to or block the cover opening, which provides a clean or free view for the camera module. In addition, any foreign matter is allowed to go out of the inner space of the protective cover by gravity or airflow during driving.

Preferably, there is no relative movement between the camera module and the protective cover. Thus, the protective cover is relatively fix with respect to the camera module, which preferably is relatively fix to the vehicle.

Preferably, the cover opening has a circular shape or an elliptical shape. These shapes define the free FOV of the camera lens, which should be maximized but simultaneously a good protection of the camera lens should be guaranteed.

Preferably, the protective cover comprises a convexly shape, preferably an at least partially spherical outer shape and/or inner shape. Such convex or partially spherical shape is aerodynamically optimized for minimizing pollution of the camera lens.

The protective cover is optically transparent. Therefore, the camera module can provide an FOV also outside the cover opening. Thus, the FOV of the camera module is further extended over the FOV provided by the cover opening.

Preferably, the optical axis O of the camera lens goes through the cover opening. Thus, the camera module looks substantially centrally through the cover opening.

Preferably, the optical axis O of the camera module is arranged 20° to 40°, preferably at least 250, preferably 25° in respect to the vertical axis. Preferably, the camera module looks substantially downwards and forwards. Further, due to this inclination the lens comprises a front surface that is inclined in such a way that water droplets at the front surface of the lens are flowing downwards due to gravity.

Preferably, protective cover preferably has a wedge shape in a side projection. If the edge of the cover opening is parallel to the ground or horizontally and the camera module is arranged at least 25° in respect to the vertical axis and to the front, the cover preferably has a wedge shape seen from the side, in transversal direction T, such that at the front, i.e. against the wind, the protective cover has a height that is larger than the height of the protective cover at the back. This protects the camera lens and also ensures that water droplets entering the interior of the protective cover can flow away by gravity and air stream.

Preferably, the horizontal field of view of the camera lens has at least an angle of 70°, preferably of 90°. Thus, the camera lens is preferably a wide-angle lens and can cover the required class IV FOV.

Preferably, the inner surface of the protective cover at the edge of the cover opening is oriented substantially parallel to the rays of light of the field of view. Therefore, the transition between the field of view within the cover opening and the field of view outside the cover opening is less visible.

The vehicle front camera arrangement further comprises a mounting arm that houses the camera module, wherein the protective cover is mounted to the mounting arm such there is a gap arranged between the protective cover and the mounting arm at the lower edge of the protective cover. The gap provides a fluid connection between the protective cover and the mounting arm such that a water drop will be first gathered within the gap at the deepest point of protective cover until it is big enough to fall down or close to the distance to the mounting arm to go to the deepest point of the device.

The vehicle front camera arrangement further comprises a camera carrier mounting the camera module within the mounting arm. The camera carrier increases the mechanical strength of the camera module and serves for a rigid connection of the camera module within the mounting arm.

The camera carrier comprises a front surface and the camera module comprises a front surface, wherein the front surface of the camera carrier and/or the front surface of the camera module are arranged 20° to 40 °, preferably at least 25°, preferably 25° in respect to the horizontal axis. Therefore, the front surfaces are inclined with respect to the horizontal axis so as to guide any fluid on their surfaces downwards and out of the space within the protective cover.

Preferably, the vehicle front camera arrangement further comprises a structure element, a first mounting arm outer shell and a second mounting arm outer shell, wherein the first and second mounting arm outer shells encapsulate the structure element. The structure element provides the mechanical structure of the vehicle front camera arrangement and the outer shells provide environmental protection and aerodynamics. The structure element comprises the camera carrier at one end and a mounting portion at the other end, for mounting the vehicle front camera arrangement at the vehicle.

### 4. Short description of the drawings

In the following, preferred embodiments of the invention are disclosed by reference to the accompanying figures, in which shows:
- Fig. 1:: a three-dimensional exploded view of a preferred embodiment of a vehicle front camera arrangement;
- Fig. 2:: a partial sectional side view of the vehicle front camera arrangement of Fig. 1;
- Fig. 3:: sectional side view according to section A-A of Fig. 10 of a preferred embodiment of a protective cover of the vehicle front camera arrangement of Fig. 1;
- Fig. 4A:: a three-dimensional partial view of a truck comprising prior art class V and class VI mirrors;
- Fig. 4B:: a schematic top view showing the legally required fields of view for class V and class VI mirrors and vehicle camera arrangements;
- Fig. 5A: a three-dimensional view of the legally required FOV for class VI;
- Fig. 5B: a three-dimensional view of the legally required FOV for class VI and the protective cover of Fig. 3;
- Fig. 6:: a partial sectional side view of the vehicle front camera arrangement of Fig. 1 with FOV of the camera module;
- Fig. 7:: a partial sectional side view of the vehicle front camera arrangement of Fig. 1;
- Fig. 8:: a sectional side view of a detail of the vehicle front camera arrangement of Fig. 1; and
- Fig. 9:: a side view from the left side of the vehicle front camera arrangement of Fig. 1; and
- Fig. 10:: a front view of the vehicle front camera arrangement of Fig. 1.

### 5. Description of preferred embodiments

In the following preferred embodiments of the invention are described with respect to the figures.

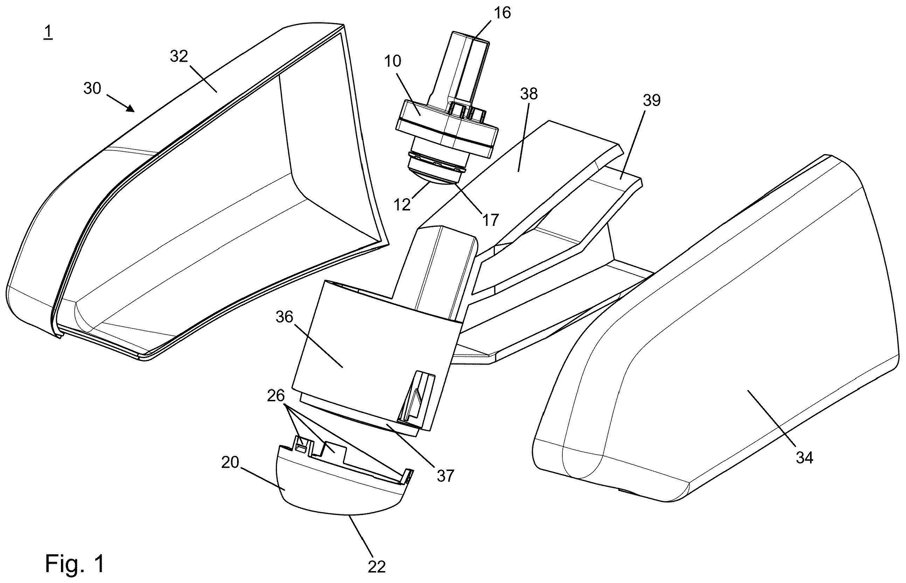

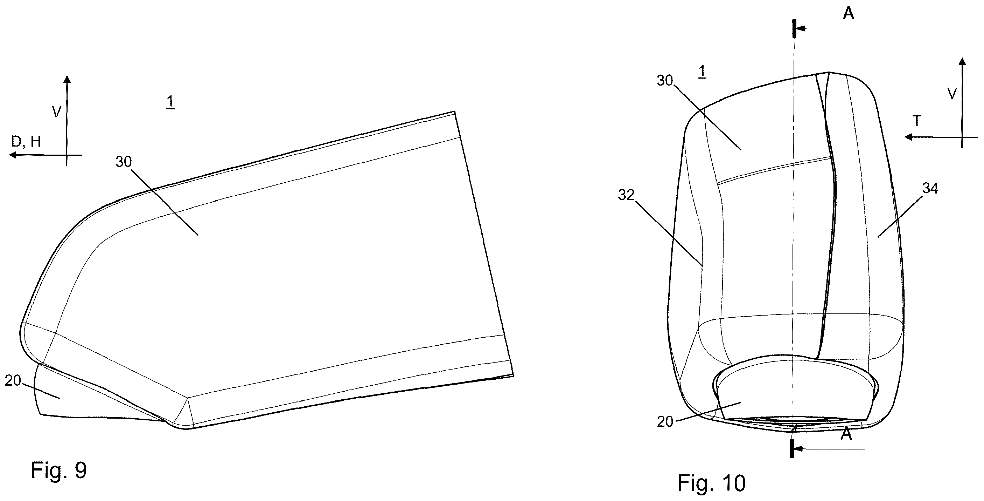

Fig. 1 shows the individual parts of a vehicle front camera arrangement 1. Figs. 9 and 10 show the vehicle front camera arrangement 1 in assembled condition. The vehicle front camera arrangement 1 comprises a mounting arm 30, a camera module 10 and a protective cover 20. The mounting arm 30 comprises or consists of a structure element 38, a first mounting arm outer shell 32 and a second mounting arm outer shell 34.

The structure element 38 and the mounting arm outer shells 32, 34 are preferably made of an injection molded plastic material. The structure element 38 is designed to bear essentially the complete mechanical load of the vehicle front camera arrangement 1. It particularly serves for mounting the camera module 10 at a certain distance and with a certain angle to the car body of the vehicle. Particularly, the structure element 38 is mounted to an area of the front side of a passenger compartment above the windscreen of a commercial truck or van 100. The camera module 10 is fixed with respect to the mounting arm 30. Thus, there is no relative movement of the camera module 10 or the camera lens 12, what would change the FOV, with respect to the mounting arm 30 or the motor vehicle 100. Therefore, the FOV of the camera module 10 is fix with respect to the motor vehicle 100.

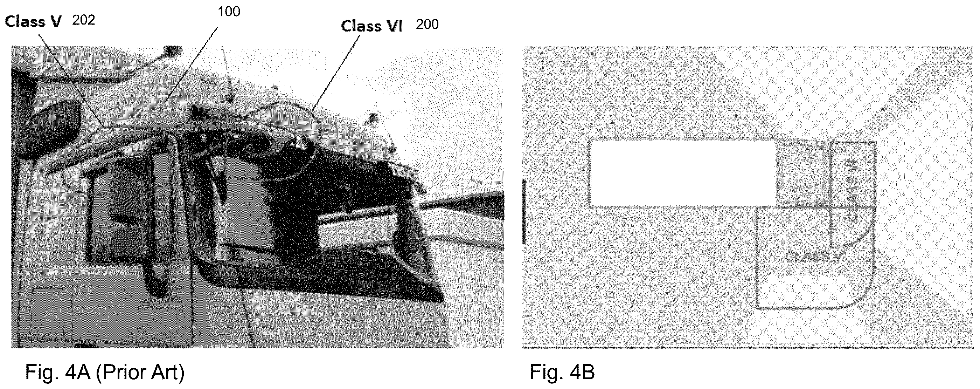

The vehicle front camera arrangement 1 has a field of view (FOV) that corresponds to a class VI mirror 200 of the state in the art as shown in Figs. 4A and 4B. The legally required and defined class VI FOV looks downwards to the ground and generally comprises the area directly in front of the vehicle 100 and a quarter circle shaped area to the front right of the vehicle 100 as shown in Fig. 4B. Thus, the corresponding camera module 10 looks downward to the ground at the front and front right side of the vehicle 100.

Figs. 4A and 4B also show the legally defined class V FOV and the corresponding class V mirror 202 that basically covers the right side along the passenger compartment of the vehicle 100.

The first and second mounting arm outer shells 32, 34 encapsulate the structure element 38 including the camera module 10 in total. The mounting arm outer shells 32, 34 are a housing that provides environmental protection and aerodynamics. The structure element 38 further comprises a camera carrier 36 for mounting the camera module 10 at one end, and a mounting portion 39 at the other end, for mounting the vehicle front camera arrangement to the vehicle 100.

The camera module 10 is an electronic camera, preferably a CCD colour camera. It comprises an optical lens 12 that is adapted to the FOV of a class VI vehicle camera. Further, the camera module 10 comprises an electrical connector 16 for connection of the camera module 10 to a corresponding cable (not shown) of an electronic bus of the vehicle 100. Thereby the camera module can provide video data to the vehicle 100. The camera module 10 points or looks downwards to the floor in front of the motor vehicle 100.

The protective cover 20 is preferably an outermost cover, which is directly subjected to the airflow in front of the vehicle 100. The protective cover 20 is made of an optically transparent plastic material, so that part of the FOV of the camera module 10 can go through the protective cover 20 for increasing the FOV of the camera module 10 outside of the legally required FOV for a class VI vehicle camera. The protective cover 20 comprises attachment hooks 26 by which the protective cover is mounted to the holding arm 30, preferably to the structure element 38, to the mounting arm outer shells 32, 43 and/or to the camera carrier 36. Thus, the protective cover 20 is relatively fix to the camera module 10 that is relatively fix to the vehicle by the rigid mounting arm 30.

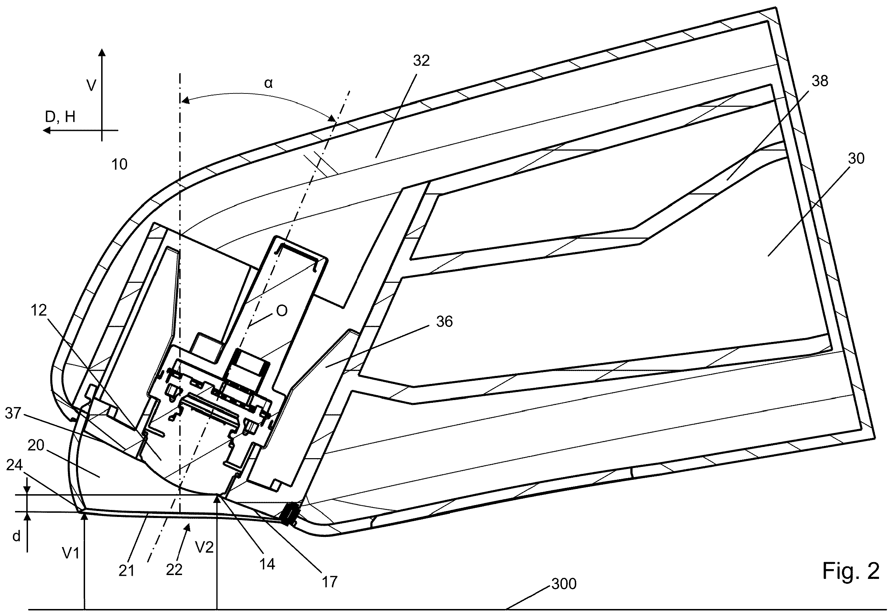

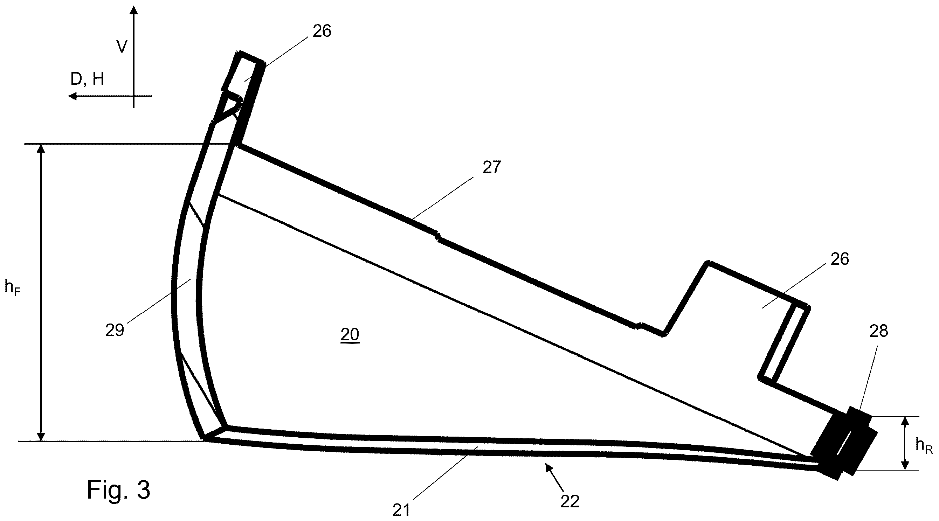

As shown in Figs. 2 and 3 the protective cover 20 is preferably a thin-walled element that has a convexly shape surrounding the camera lens 12 like a windscreen. The material or wall of the protective cover 20 defines an inner space within the protective cover and an outer space outside the protective cover. Preferably, the protective cover 20 comprises an at least partially spherical outer shape and/or inner shape. The protective cover 20 preferably has a wedge shape seen from the side, in transversal direction T (see Fig. 10). It further comprises an upper edge that forms the connection to a front side 37 of the camera carrier 36 or a front side 17 of the camera module 10. The protective cover 20 has preferably vertical height h_{F} of 15-20 mm, preferably ca. 17 mm, at front side 29 or driving direction D side and a vertical height h_{R} of 2-5 mm, preferably ca. 3 mm, at the rear side 28 or side opposite to the driving direction D. The protective cover 20 comprises a cover opening 22 that allows the camera module 20 to look through with a FOV as legally required for a class VI vehicle camera. Thus, the optical axis O of the camera lens 12 goes through the cover opening 22. The camera lens 12 is arranged vertically above the protective cover 20. This ensures a good protection of the camera lens 12 from dust, water or other dirt, when driving or parking the motor vehicle 100.

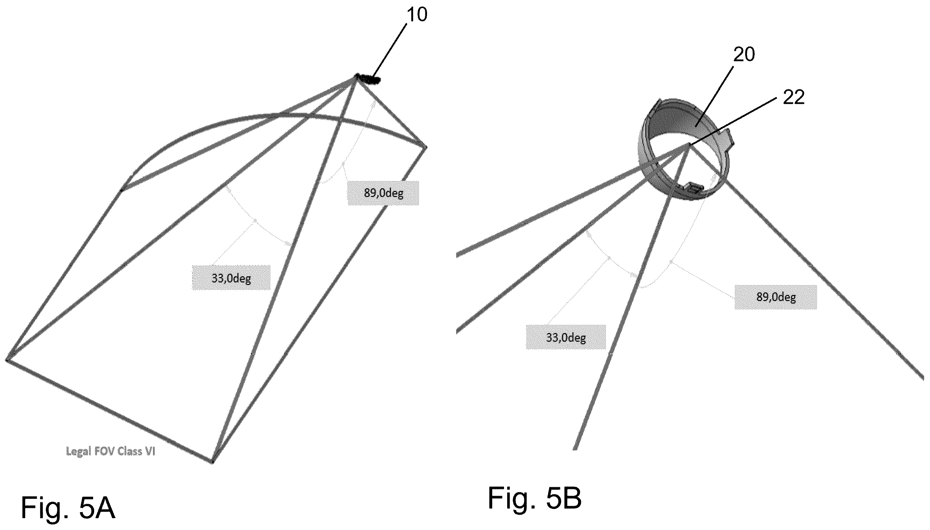

Fig. 5 shows the legally required FOV for a class VI. The minimum horizontal angle is 89 degree and the minimum vertical angle is 33 degree. This legal FOV for class VI is completely comprised within the cover opening 22 of the protective cover 20 as shown in Fig. 5B. Thus, the legal FOV for class VI is also visible, even if the protective cover 20 becomes polluted during driving. This ensures always a free view for the legal FOV for class VI.

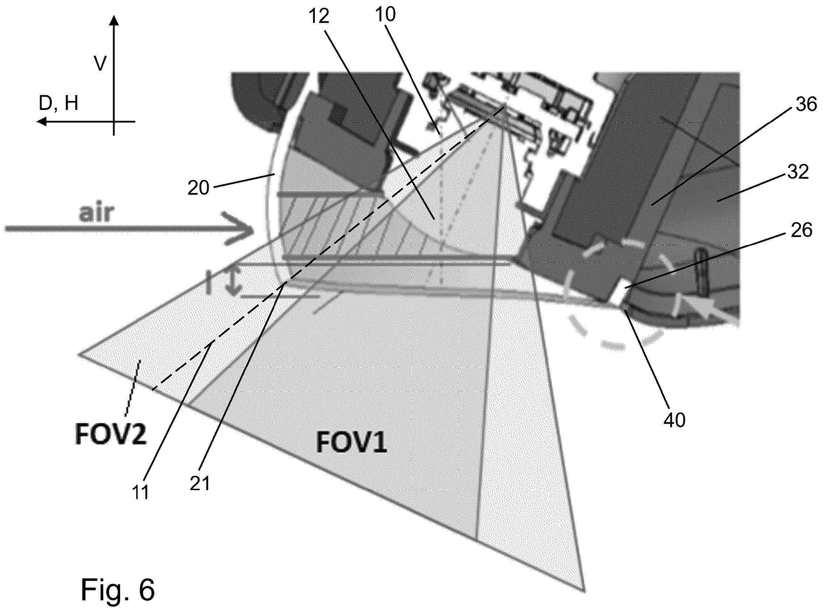

In Fig. 6 the legal FOV for class VI is designated as "FOV₁". Preferably, the cover opening 22 is larger than only required for allowing a free view for the legal field of view FOV1. The additional area of FOV2 outside FOV1 extends the overall FOV of the camera module 10. It comprises a part of the cover opening 22 and a part that goes through the transparent protective cover 20.

Fig. 6 also shows that the inner surface of the protective cover 20 at the edge 21 of the cover opening 22 is oriented substantially parallel to the rays of light of the field of view. Thus, the edge 21 is slanted or chamfered parallel to the rays of light 11 intersecting the edge 21. This makes the transition between the cover opening 22 and the transparent material of the protective cover 20 less visible for the camera module 10.

The cover opening 22 preferably comprises an edge 21 that is arranged substantially parallel to the ground 300. Preferably, the cover opening 22 has a circular shape or an elliptical shape.

As particularly shown in Fig. 2 the cover opening 22 in a projection seen against the driving direction D comprises a highest portion 24 that extends vertically to a lower vertical position V1 in respect to the ground 300 than the vertical position V2 of a lowest portion 14 of the camera lens 12. For example, a distance d of at least 5 mm may be given between the vertical position V1 and the vertical position V2. This ensures that an air stream generated by driving the vehicle 100 (see. Fig. 6) directly hits the front side of the protective cover 20 but the not the camera lens 12 arranged within the slip stream.

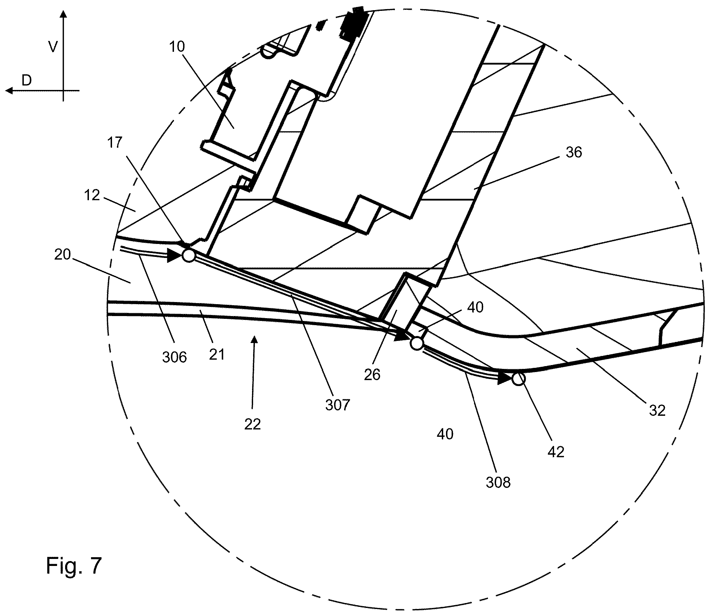

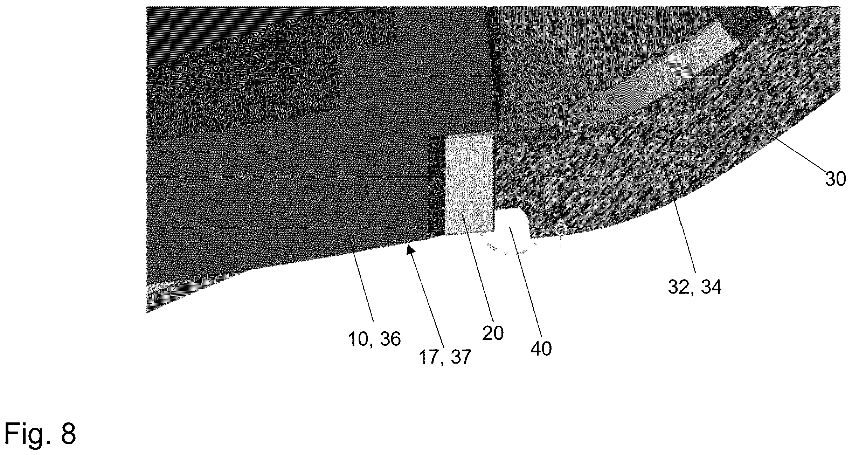

As shown with respect to Figs. 2, 7 and 8, the optical axis O of the camera module 10 is arranged at an angle α of 20° to 40°, preferably at least 25°, preferably 25°, in respect to the vertical axis V. This ensures that any water that eventually reaches the camera lens 12 or the front surface 17 of the camera module 10 will flow downwards due to gravity as shown in Fig. 7 by arrow 306. Likewise, as the front surface 17 of the camera module 10 and the front surface 37 of the camera carrier 36 are also arranged at an angle of 20° to 40°, preferably at least 25°, preferably 25°in respect to the horizontal axis H the water will further flow downwards as shown by arrow 307 until it reaches a gap 40 at the underside of the vehicle front camera arrangement 1 between the protective cover 20 and the housing arm 30. Particularly, the gap 40 is arranged between the protective cover 20 and the mounting arm outer shells 32, 34. The gap 40 provides a fluid connection between the protective cover 20 and the mounting arm 30 such that a water drop will be first gathered within the gap 40 at the deepest point of protective cover 20 until it is big enough to fall down or close to the distance to the mounting arm 30 to go to the deepest point thereof. Thus, the gap 40 accumulates water that flows down the front surfaces 37, 17 as shown in Fig. 7. This prevents the water from entering into the interior of the vehicle front camera arrangement 1 and preferably keeps the camera module 10 dry. Further, the gap 40 allows the water to accumulate such that it reaches a critical size to generate a water drop that drops down at the deepest point of the vehicle front camera arrangement 1 as shown at reference no. 308.

### List of reference signs:

- 1: vehicle front camera arrangement
- 10: camera module
- 11: ray of light
- 12: camera lens
- 13: sealing means
- 14: lowest portion of camera lens / lowest portion of camera module
- 17: front surface of camera module
- 20: protective cover
- 21: edge of cover opening
- 22: cover opening
- 24: highest portion of cover opening
- 26: attachment hooks
- 27: upper edge
- 28: rear side
- 29: front side
- 30: mounting arm
- 32: first mounting arm outer shell
- 34: second mounting arm outer shell
- 36: camera carrier
- 37: front surface of camera carrier
- 38: structure element
- 40: gap between protective cover and mounting arm
- 42: deepest point
- 100: motor vehicle
- 200: class VI mirror
- 202: class V mirror
- 300: ground
- 306, 307, 308: water flow
- O: optical axis of camera module
- D: driving direction
- V: vertical axis
- H: horizontal axis
- T: transversal axis
- FOV: field of view

## Claims

1. A vehicle (100) including a camera arrangement (1), the camera arrangement (1) comprising:
a. a camera module (10) comprising a camera lens (12), the camera lens (12) having a field of view (FOV);
b. a protective cover (20) for protecting the camera lens (12),
c. wherein the protective cover (20) comprises a cover opening (22) that is arranged such that the field of view (FOV) of the camera lens (12) at least partially goes through the cover opening (22); **characterized in that**
d. the vehicle camera arrangement (1) is a vehicle front camera arrangement (1);
e. the camera module (10) points downwards to the floor in front of the vehicle (100);
f. the protective cover (20) is optically transparent;
g. the vehicle camera arrangement (1) further comprises a mounting arm (30) that houses the camera module (10), wherein the protective cover (20) is mounted to the mounting arm (30) such there is a gap (40) arranged between the protective cover (20) and the mounting arm (30); and
h. a camera carrier (36) mounting the camera module (10) within the mounting arm (30), wherein the camera carrier (36) comprises a front surface (37) and the camera module (10) comprises a front surface (17), wherein the front surface (37) of the camera carrier (36) and/or the front surface (17) of the camera module (10) are arranged 20° to 40° in respect to the horizontal axis (H).

2. Vehicle according to claim 1, wherein the camera lens (12) is arranged, in vertical direction (V) above the cover opening (22).

3. Vehicle according to claim 1, wherein the highest portion (24) of the cover opening (22) is vertically at least 5 mm lower than the lowest portion (14) of the camera lens (12) or the lowest portion (14) of the overall camera module (10).

4. Vehicle according to one of the claims 1 to 3, wherein the edge (21) of the cover opening (22) is arranged substantially parallel to the ground (300).

5. Vehicle according to one of the claims 1 to 4, wherein the cover opening (22) has a circular shape or an elliptical shape.

6. Vehicle according to one of the claims 1 to 5, wherein protective cover (20) is an outermost cover.

7. Vehicle according to one of the claims 1 to 6, wherein the optical axis (O) of the camera lens (12) goes through the cover opening (22).

8. Vehicle according to one of the claims 1 to 7, wherein the optical axis (O) of the camera module (10) is arranged 20° to 40°, preferably at least 25°, preferably 25° in respect to the vertical axis (V).

9. Vehicle according to claim 8, wherein the protective cover (20) has a wedge shape in a side projection.

## Patentansprüche

1. Fahrzeug (100) mit einer Kameraanordnung (1), wobei die Kameraanordnung (1) umfasst:
a. ein Kameramodul (10) mit einem Kameraobjektiv (12), wobei das Kameraobjektiv (12) ein Sichtfeld (FOV) aufweist;
b. eine Schutzabdeckung (20) zum Schützen des Kameraobjektivs (12),
c. wobei die Schutzabdeckung (20) eine Abdeckungsöffnung (22) umfasst, die so angeordnet ist, dass das Sichtfeld (FOV) des Kameraobjektivs (12) zumindest teilweise durch die Abdeckungsöffnung (22) verläuft; **dadurch gekennzeichnet, dass**
d. die Fahrzeugkameraanordnung (1) eine Fahrzeugfrontkameraanordnung (1) ist;
e. das Kameramodul (10) nach unten auf den Boden vor dem Fahrzeug (100) zeigt;
f. die Schutzabdeckung (20) optisch transparent ist;
g. die Fahrzeugkameraanordnung (1) ferner einen Montagearm (30) umfasst, der das Kameramodul (10) aufnimmt, wobei die Schutzabdeckung (20) derart an dem Montagearm (30) montiert ist, dass ein Spalt (40) zwischen der Schutzabdeckung (20) und dem Montagearm (30) angeordnet ist; und
h. einen Kameraträger (36), der das Kameramodul (10) innerhalb des Montagearms (30) montiert, wobei der Kameraträger (36) eine Vorderfläche (37) umfasst und das Kameramodul (10) eine Vorderfläche (17) umfasst, wobei die Vorderfläche (37) des Kameraträgers (36) und/oder die Vorderfläche (17) des Kameramoduls (10) in Bezug auf die horizontale Achse (H) in einem Winkel von 20° bis 40° angeordnet sind.

2. Fahrzeug nach Anspruch 1, wobei das Kameraobjektiv (12) in vertikaler Richtung (V) über der Abdeckungsöffnung (22) angeordnet ist.

3. Fahrzeug nach Anspruch 1, wobei der höchste Abschnitt (24) der Abdeckungsöffnung (22) vertikal mindestens 5 mm niedriger ist als der niedrigste Abschnitt (14) des Kameraobjektivs (12) oder der niedrigste Abschnitt (14) des gesamten Kameramoduls (10).

4. Fahrzeug nach einem der Ansprüche 1 bis 3, wobei die Kante (21) der Abdeckungsöffnung (22) im Wesentlichen parallel zu dem Boden (300) angeordnet ist.

5. Fahrzeug nach einem der Ansprüche 1 bis 4, wobei die Abdeckungsöffnung (22) eine kreisförmige Form oder eine elliptische Form aufweist.

6. Fahrzeug nach einem der Ansprüche 1 bis 5, wobei Schutzabdeckung (20) eine äußerste Abdeckung ist.

7. Fahrzeug nach einem der Ansprüche 1 bis 6, wobei die optische Achse (O) des Kameraobjektivs (12) durch die Abdeckungsöffnung (22) verläuft.

8. Fahrzeug nach einem der Ansprüche 1 bis 7, wobei die optische Achse (O) des Kameramoduls (10) in Bezug auf die vertikale Achse (V) in einem Winkel von 20° bis 40°, vorzugsweise mindestens 25°, vorzugsweise 25°, angeordnet ist.

9. Fahrzeug nach Anspruch 8, wobei die Schutzabdeckung (20) in einer Seitenansicht eine Keilform aufweist.

## Revendications

1. Un véhicule (100) comprenant un agencement de caméra (1), l'agencement de caméra (1) comprenant :
a. un module de caméra (10) comprenant un objectif de caméra (12), l'objectif de caméra (12) ayant un champ de vision (FOV) ;
b. un capot protecteur (20) pour protéger l'objectif de caméra (12),
c. dans lequel le capot protecteur (20) comprend une ouverture de capot (22) qui est agencée de telle manière que le champ de vision (FOV) de l'objectif de caméra (12) passe au moins partiellement au travers de l'ouverture de capot (22) ; **caractérisé en ce que**
d. l'agencement de caméra du véhicule (1) est un agencement de caméra avant de véhicule (1) ;
e. le module de caméra (10) pointe vers le bas vers le sol à l'avant du véhicule (100) ;
f. le capot protecteur (20) est optiquement transparent ;
g. l'agencement de caméra du véhicule (1) comprend en outre un bras de montage (30) qui loge le module de caméra (10), le capot protecteur (20) étant monté sur le bras de montage (30) de manière à ce qu'il y ait un intervalle (40) entre le capot protecteur (20) et le bras de montage (30) ; et
h. un support de caméra (36) montant le module de caméra à l'intérieur du bras de montage (30), le support de caméra (36) comprenant une surface frontale (37) et le module de caméra (10) comprenant une surface frontale (17), la surface frontale (37) du support de caméra (36) et/ou la surface frontale (17) du module de caméra (10) étant agencés de 20° à 40° par rapport à l'axe horizontal (H).

2. Véhicule selon la revendication 1, dans lequel l'objectif de caméra (12) est, en direction verticale (V), agencé au-dessus de l'ouverture de capot (22).

3. Véhicule selon la revendication 1, dans lequel la partie la plus élevée (24) de l'ouverture de capot (22) est située verticalement au moins 5 mm plus bas que la partie la plus basse (14) de l'objectif de caméra (12) ou que la partie la plus basse (14) du module de caméra (10) hors-tout.

4. Véhicule selon l'une des revendications 1 à 3, dans lequel le bord (21) de l'ouverture de capot (22) est agencé substantiellement parallèlement au sol (300).

5. Véhicule selon l'une des revendications 1 à 4, dans lequel l'ouverture de capot (22) a une forme circulaire ou une forme elliptique.

6. Véhicule selon l'une des revendications 1 à 5, dans lequel le capot protecteur (20) est un capot le plus externe.

7. Véhicule selon l'une des revendications 1 à 6, dans lequel l'axe optique (O) de l'objectif de caméra (12) traverse l'ouverture de capot (22).

8. Véhicule selon l'une des revendications 1 à 7, dans lequel l'axe optique (O) du module de caméra (10) est agencé de 20° à 40°, de préférence d'au moins 25°, de préférence de 25°, par rapport à l'axe vertical (V).

9. Véhicule selon la revendication 8, dans lequel le capot protecteur (20) est cunéiforme en projection latérale.
